(19) **Europäisches Patentamt**

**European Patent Office**

**Office européen des brevets**

(11) **EP 0 731 335 B1**

(12) **EUROPEAN PATENT SPECIFICATION**

(45) Date of publication and mention
of the grant of the patent:
**05.12.2001 Bulletin 2001/49**

(51) Int Cl.⁷: **G01B 9/02**, G01B 11/16

(21) Application number: **96301533.4**

(22) Date of filing: **06.03.1996**

(54) **Apparatus and method for non destructive testing of coherent radiation illuminated material**

Vorrichtung und Verfahren zum zerstörungsfreien Testen von mit Kohärenzlicht bestrahlten Materialien

Appareil et méthode pour tester de façon non-déstructive des matériaux illuminés par de la lumière cohérente

(84) Designated Contracting States:
**DE ES FR GB IT NL**

(30) Priority: **08.03.1995 GB 9504675**

(43) Date of publication of application:
**11.09.1996 Bulletin 1996/37**

(73) Proprietor: **BAE SYSTEMS plc**
**Farnborough, Hampshire GU14 6YU (GB)**

(72) Inventors:
 • **Parker, Steve Carl Jamieson**
  **Bristol, BS12 7QW (GB)**
 • **Salter, Phillip Langley**
  **Bristol, BS12 7QW (GB)**

(56) References cited:
**EP-A- 0 485 728**

## Description

This invention relates to apparatus and a method for the non destructive testing of coherent radiation illuminated material.

Optical inspection involving shearography is becoming increasingly important as a tool for non destructive evaluation or testing of materials and is proving to have high sensitivity and tolerance to environmental noise. Such a system involving shearography operates by generating two laterally displaced images of the material to be tested when the material is illuminated using coherent radiation. The two images are modulated by a speckle pattern due to the high coherence of the illuminating radiation and the images interfere to form a macroscopic speckle pattern which may be recorded in any convenient manner (see e.g. EP-A-0 485 728).

Interferometric images (fringe patterns) may be generated by differencing two speckle patterns of the sheared twin image with the second speckle pattern being recorded after the material being tested has been subjected to a stressing force. However with such a conventional technique the resulting fringe patterns are noisy due to spurious intensity variations and consequently the sensitivity of the method of testing is undesirably reduced. One technique for noise suppression is for the phase difference to be extracted from the interferograms.

The detection rate for small defects in the material being tested may be improved by calculation of the phase of the interferogram. This removes amplitude noise which is prevalent in speckle images and produces images where the defect is shown clearly as a "figure of eight" set of high contrast tangent fringes superimposed on a uniform phase background. The relative phase difference between the sheared images may be calculated by sequentially phase shifting one of the sheared images in any convenient manner and a series of interferograms may then be generated for a range of incremental phase shifts. These images may be manipulated mathematically to yield a phase map.

Conventionally four images are used for calculation purposes because this provides a good compromise between accuracy of the final phase map and speed of calculation. However the acquisition of four sequential images suffers from various limitations. Firstly data acquisition and processing takes in excess of four video frames if the images are recorded sequentially which is markedly slower than real time. Secondly the test environment may be disturbed during data acquisition so that the four phase stepped images become decorrelated. Thirdly the phase shifter must be calibrated to provide four accurate phase steps which is difficult because phase shifting devices are often non linear and prone to hysteresis.

Previous attempts to overcome these limitations have involved using apparatus in which there is one recording camera which obtains only two images with a single phase step or by using apparatus involving four cameras together to produce four images so that all the phase stepped images are acquired in parallel. The first of these conventional techniques requires the use of band pass filtering and consequently is inaccurate. The second technique is very complicated with a need for precise optical alignment and careful matching of the four cameras. Additionally it is extremely expensive due to the use of duplicate optics and instrumentation.

There is thus a need for a generally improved and simplified apparatus and method for non destructive testing of coherent radiation illuminated material which at least minimises the foregoing limitations.

According to one aspect of the present invention there is provided apparatus for non destructive testing of coherent radiation illuminated material including a shearing two armed Mach-Zehnder interferometer device for generating a first four phase shifted laterally displaced speckle pattern images of the unstressed illuminated material and a second four phase shifted laterally displaced speckle pattern images of the stressed illuminated material, and two separate recording means for recording the first and second four speckle pattern images, which interferometer device has two end to end located coplanar beam splitters, a first mirror located substantially parallel to the beam splitters to reflect images transmitted through the first beam splitter from the illuminated material to the second beam splitter for transmission thereby to the first recording means and for reflection thereby to the second recording means, and a piezo electric transducer mounted second mirror located substantially in parallel with the coplanar first and second beam splitters and substantially in parallel with and facing the first mirror to reflect images reflected from the first beam splitter to the second beam splitter for transmission thereby to the second recording means and for reflection thereby to the first recording means, which second mirror is tilted at an angle of substantially one degree with respect to the first mirror to provide shearing of the images and operable via the piezo electric transducer to effect phase shifting.

Preferably each beam splitter is cubic in form, with the two beam splitters being located edge to edge to define two opposed triangular spaces between the two beam splitters, with the first mirror being located in one said triangular space adjoining an outer edge of each beam splitter, and with the second mirror being located in parallel to and spaced from the first mirror across said other triangular space to adjoin a further outer edge of each beam splitter.

Conveniently the first mirror is provided by a face on a 45 degree prism, which prism is located in said one triangular space in face to face contact with the two beam splitters with the face providing the mirror bounding the two 45 degree angles.

Advantageously the two recording means are located one adjacent an outer surface of the second beam splitter adjoining the first mirror and the other adjacent the outer surface of the second beam splitter adjoining the second mirror.

Preferably each recording means is a charge coupled device operable as a camera.

Conveniently the apparatus includes an optical lens assembly located adjacent a face of the first beam splitter adjoining the second mirror and operable to direct images of the illuminated material to the first beam splitter.

Alternatively the apparatus includes a first optical lens assembly located between the second beam splitter and the first recording means, and a second optical lens assembly located between the second beam splitter and the second recording means.

According to a second aspect of the present invention there is provided a method for non destructive testing of material in which the material to be tested is illuminated by coherent radiation, (a) a first two laterally displaced speckle pattern images of the illuminated unstressed material are simultaneously generated by a shearing two armed Mach-Zehnder interferometer device, which views the illuminated material, and recorded on two separate recording means, (b) said first two speckle pattern images are differenced to produce a third image ($I_A$), (c) the path length of one of the arms of the interferometer device is incremented to produce a phase shift of $\frac{\pi}{2}$ radians, (d) a second two laterally displaced speckle pattern images of the unstressed illuminated material are simultaneously generated by said interferometer device and recorded on said two separate recording means, (e) the second two speckle pattern images are differenced to produce a fourth image ($I_B$), (f) the speckle phase profile $\phi_1$ is derived for the unstressed illuminated material from the relationship,

$$\phi = \tan^{-1} \frac{(I_B)}{(I_A)};$$

the steps (a) to (f) are repeated with the material in a stressed condition to produce a stressed speckle phase profile $\phi2$ and the difference term $\phi_1 - \phi_2$ calculated to reveal the material defects.

Preferably the coherent radiation utilised is visible light radiation.

Conveniently steps (b) and (e) are carried out at substantially the same time.

For a better understanding of the present invention, and to show how the same may be carried into effect, reference will now be made, by way of example, to the accompanying drawings in which:-

Figure 1 is a schematic plan view of apparatus according to a first embodiment of the present invention for non destructive testing of coherent radiation illuminated material,

Figure 2 is a schematic plan view of apparatus according to a second embodiment of the present invention, and

Figure 3 is a perspective view from the side of part of apparatus according to a third embodiment of the present invention.

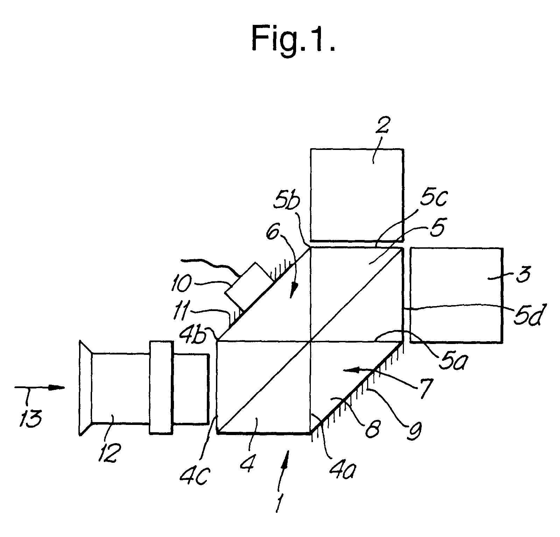

Apparatus according to the present invention for non destructive testing of coherent radiation illuminated material (not shown) is basically as indicated in Figure 1. The apparatus includes a shearing two-armed Mach-Zehnder interferometer device 1 and two separate recording means 2 and 3. The device 1 operates to generate a first four phase shifted laterally displaced speckle pattern images of the unstressed illuminated material and a second four phase shifted laterally displaced speckle pattern images of the stressed illuminated material whilst the two separate recording means 2 and 3 operate to record the first and second four speckle pattern images.

The device 1 has two end to end located coplanar beam splitters 4 and 5, each of which is cubic in form located edge to edge to define two opposed triangular spaces 6 and 7 between the two beam splitters 4 and 5. The device 1 also includes a 45 degree prism 8 located in the triangular space 7 and having a face bounding the two 45 degree angles formed as a first mirror 9 located to reflect images transmitted through the first beam splitter 4 from the illuminated material to the second beam splitter 5 for transmission thereby to the first recording means 2 and for reflection thereby to the second recording means 3. Thus the 45 degree prism 8 is in face to face contact with the two beam splitters 4 and 5 so that the first mirror 9 adjoins an outer edge of each beam splitter 4a and 5a. The first mirror 9 may be a plain unsilvered face of the prism which provides a mirror function by total internal reflection in the prism 8.

The device 1 also includes a piezo electric transducer 10 on which is mounted a second mirror 11 located substantially in parallel with the coplanar first and second beam splitters and substantially in parallel with and facing the first mirror 9. The second mirror 11 is tilted at an angle of substantially 1° about a vertical axis through the mirror 11 with respect to the first mirror 9 to misalign the arm of the interferometer device 1 in which it is located, to provide shearing of the images and operable via the transducer 10 to effect phase shifting. This second mirror 11 is located in parallel to and spaced from the first mirror 9 across the other triangular space 6 to adjoin a further outer edge 4b and 5b of each beam splitter 4 and 5.

The recording means 2 and 3 are located so that the first means 2 is adjacent an outer surface 5c of the second beam splitter 5 adjacent the other surface of the beam splitter 5 adjoining the second mirror 11 and with the second recording means 3 adjacent an outer surface 5d of the beam splitter 5 adjoining the first mirror 9. Each recording means 2 and 3 conveniently is a charge coupled device operating as a camera.

Additionally forming part of the apparatus of the invention is an optical lens assembly 12 located against a face 4c of the first beam splitter 4 adjoining the second mirror 11 and operable to direct images 13 of the illuminated material to the first beam splitter 4.

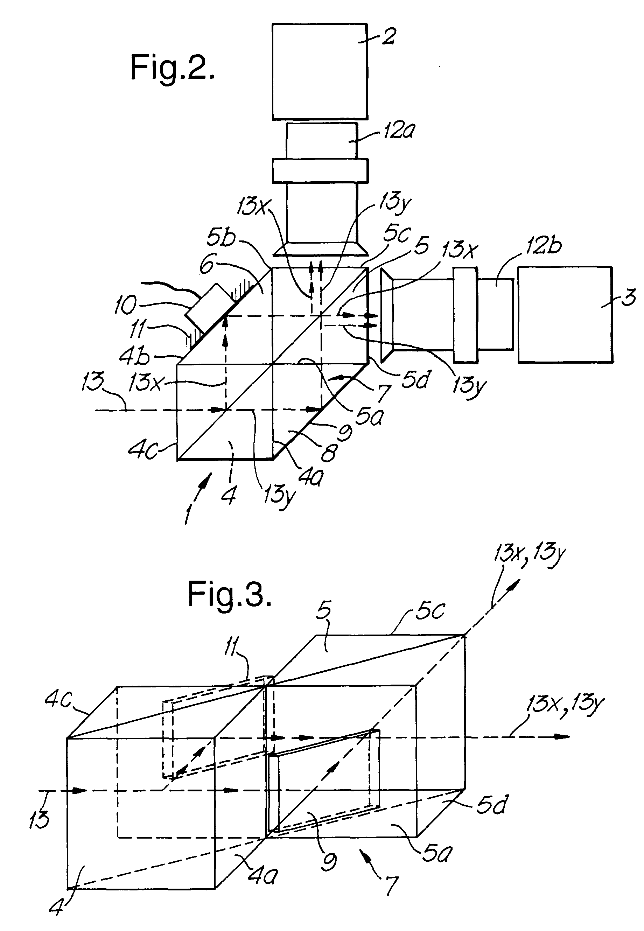

In the alternative construction of the second embodiment of the invention as shown in Figure 2 the single optical lens assembly 12 is dispensed with and replaced by two further optical lens assemblies 12a and 12b, with the first optical lens assembly 12a being located between the second beam splitter 5 and first recording means 2 and with the second optical lens assembly 12b being located between the second beam splitter 5 and the second recording means 3. Otherwise the apparatus of Figure 2 is the same as that of Figure 1 and like parts have been given like reference numerals and will not be described again.

Figure 3 of the accompanying drawings shows a modification applicable to either the Figure 1 or the Figure 2 embodiment. In the Figure 3 construction the prism 8 in the triangular space 7 is dispensed with and replaced by a plane mirror 9 located substantially parallel to the mirror 11 across the triangular space 7 between the beam splitter faces 4a and 5a.

Thus according to the apparatus of the present invention, four images are captured using only two cameras 2 and 3 and a single phase step. Each arm of the interferometer device 1 generates two image components 13x or 13y as shown in Figure 2 of the accompanying drawings, of which component 13x is sheared and component 13y is unsheared. Thus each recording means or camera 2, 3 sees two components 13x, 13y of the incoming image 13, one sheared and one unsheared, which components interfere at each camera and provide a speckle pattern image. The two speckle pattern images so formed are recorded one on each camera 2, 3 and, if desired, by a framestore, and provide the first two laterally displaced speckle pattern images. These first two laterally displaced speckle pattern images are out of phase by 180° ie one image is at 0° and the other at 180° relative thereto. In similar fashion after one of the arms of the interferometer device 1 has been incremented via the piezo-electric transducer 10 and second mirror 11, the second two laterally displaced speckle pattern images are produced from the two image components 13x and 13y which are phased shifted by $\frac{\pi}{2}$ radians from the first two images, so that one image is at 90° and the other image at 270°.

The four speckle pattern images may be differenced in pairs and the resulting two further images used to calculate a speckle phase profile $\phi_1$ for the unstressed material. This may be done at substantially the same time.

A further four speckle pattern images are produced in the same way after the material has been stressed, for example by heat, pressure, static loading or acoustically and the same steps repeated to calculate a speckle phase profile $\phi_2$ for the stressed material. The difference term ($\phi_1$ - $\phi_2$) is then calculated to reveal the defects of the materials.

In basic terms the method of the invention for non destructive testing of material in which the material to be tested is illuminated by coherent radiation such as visible light radiation provided by a laser involves generation of a first two laterally displaced speckle pattern images of the illuminated unstressed material by the shearing two armed Mach-Zehnder interferometer device

1. The device 1 generates two anti-phase outputs of the form.

$$i_1(x,y) = a(x,y)+b(x,y)\cos[\phi(x,y)] \qquad (1)$$

$$1_3(x,y) = a(x,y)+b(x,y)\cos[\phi(x,y)+\pi] \qquad (2)$$

If the two cameras 2,3 are in perfect registration, and have matched gain/sensitivity characteristics, these digitised first pair of images may be subtracted or differenced to produce a third image IA which is independent of the noise term a(x,y):

$$I_A(x,y) = 2b(x,y)\cos[\phi(x,y)] \qquad (3)$$

If the path length of one of the arms of the interferometer device 1 is incremented using the mirror 11 to produce a phase shift of $\pi/2$ radians, then a second two new laterally displaced speckle pattern images $i_2(x,y)$ and $i_4(x,y)$ are produced of the illuminated unstressed material:

$$i_2\ (x,y) = a(x,y)+b(x,y)\cos[\phi(x,y)+\pi/2] \tag{4}$$

$$i_4\ (x,y) = a(x,y)+b(x,y)\cos[\phi(x,y)+3\pi/2] \tag{5}$$

These speckle pattern images may be differenced to yield a fourth image $I_B$.

$$I_B(x,y)=2b(x,y)\sin[\phi(x,y)] \tag{6}$$

From which the speckle phase profile $\phi_1$ for the unstressed material is given by:

$$\phi(x,y) = \tan^{-1}\left[\frac{I_B}{I_A}\right] \qquad \ldots \ (7)$$

The foregoing steps are then repeated with the material in a stressed condition to produce a stressed speckle phase profile $\phi_2$ and the difference term $\phi_1 - \phi_2$ calculated to reveal the material defects. If desired the calculations (3) and (6) may be carried out at substantially the same time. The speckle phase $\phi_2$ shows the phase of the microscopic surface roughness and macroscoic deformation of the material. Differencing $\phi_1$ and $\phi_2$ removes the radom speckle phase of the material's rough surface allowing the underlying defects to be seen as revealed by stressing the material.

Thus with the apparatus and method of the present invention the phase stepped images are captured in quick succession thereby preventing an environmental decorrelation of the fringe patterns and facilitating real time display of the interferometric phase information. The apparatus is relatively simple in construction and efficient in its use of the collected object illumination so that all the available light is used and all two phase shifts are autocalibrated from a single calibration point.

**Claims**

1. Apparatus for non destructive testing of coherent radiation illuminated material including a shearing two armed Mach-Zehnder interferometer device (1) for generating a first four phase shifted laterally displaced speckle pattern images of the unstressed illuminated material and a second four phase shifted laterally displaced speckle pattern images of the stressed illuminated material, and two separate recording means (2, 3) for recording the first and second four speckle pattern images, which interferometer device (1) has two end to end located coplanar beam splitters (4, 5), a first mirror (9) located substantially parallel to the beam splitters (4, 5) to reflect images transmitted through the first beam splitter (4) from the illuminated material to the second beam splitter (5) for transmission thereby to the first recording means (2) and for reflection thereby to the second recording means (3), and a piezo electric transducer (10) mounted second mirror (11) located substantially in parallel with the coplanar first and second beam splitters (4, 5) and substantially in parallel with and facing the first mirror (9) to reflect images reflected from the first beam splitter (4) to the second beam splitter (5) for transmission thereby to the second recording means (3) and for reflection thereby to the first recording means (2), which second mirror (11) is tilted at an angle of substantially one degree with respect to the first mirror (9) to provide shearing of the images and operable via the piezo electric transducer (10) to effect phase shifting.

2. Apparatus according to claim 1, wherein each beam splitter (4, 5) is cubic in form, with the two beam splitters (4, 5) being located edge to edge, to define two opposed triangular spaces between the two beam splitters (4, 5), with the first mirror (9) being located in one said triangular space adjoining an outer edge (4a, 5a) of each beam splitter (4, 5), and with the second mirror (11) being located in parallel to and spaced from the first mirror (9) across said other triangular space to adjoin a further outer edge (4b, 5b), of each beam splitter (4, 5).

3. Apparatus according to claim 2, wherein the first mirror (9) is provided by a face on a 45 degree prism, which prism is located in said one triangular space in face to face contact with the two beam splitters (4, 5) with the face providing the mirror (9) bounding the two 45 degree angles.

4. Apparatus according to claim 3, wherein the two recording means (2, 3) are located one adjacent an outer surface (5d) of the second beam splitter (5) adjoining the first mirror (9) and the other adjacent the outer surface (5c) of the second beam splitter (5) adjoining the second mirror (11).

5. Apparatus according to claim 4, wherein each recording means (2, 3) is a charge coupled device operable as a camera.

6. Apparatus according to any one of claims 1 to 5, including an optical lens (12) assembly located adjacent a face (4c) of the first beam splitter (4) adjoining the second mirror (11) and operable to direct images of the illuminated material to the first beam splitter (4).

7. Apparatus according to any one of claims 1 to 5, including a first optical lens assembly (12a) located between the second beam splitter (5) and the first recording means (2), and a second optical lens assembly (12b) located between the second beam splitter (5) and the second recording means (3).

8. A method for non destructive testing of material in which the material to be tested is illuminated by coherent radiation, (a) a first two laterally displaced speckle pattern images of the illuminated unstressed material are simultaneously generated by a shearing two armed Mach-Zehnder interferometer device (1), which views the illuminated material, and recorded on two separate recording means (2, 3), (b) said first two speckle pattern images are differenced to produce a third image ($I_A$), (c) the path length of one of the arms of the interferometer device (1) is incremented to produce a phase shift of $\frac{\pi}{2}$ radians, (d) a second two laterally displaced speckle pattern images of the unstressed illuminated material are simultaneously generated by said interferometer device (1) and recorded on said two separate recording means (2, 3), (e) the second two speckle pattern images are differenced to produce a fourth image ($I_B$), (f) the speckle phase profile $\phi_1$ is derived for the unstressed illuminated material from the relationship

$$\phi_1 \ = \ \tan^{-1}\left(\frac{I_B}{I_A}\right),$$

the steps (a) to (f) are repeated with the material in a stressed condition to produce a stressed speckle phase profile $\phi_2$ and the difference term $\phi_1 - \phi_2$ calculated to reveal the material defects.

9. A method according to claim 8, in which steps (b) and (e) are carried out at substantially the same time.

10. A method according to claim 8 or claim 9, in which the coherent radiation utilised is visible light radiation.

**Patentansprüche**

1. Vorrichtung zur zerstörungsfreien Prüfung von mit Kohärenzlicht bestrahlten Materialien mit einem zweiarmigen Shearing-Mach-Zehnder-Interferometer (1) zur Erzeugung von ersten vierphasen-verschobenen seitlich versetzten Speckle-Bildern des unbestrahlten beleuchteten Materials und von zweiten vierphasen-verschobenen seitlich versetzten Speckle-Bildern des beanspruchten bestrahlten Materials, wobei zwei getrennte Aufzeichnungseinrichtungen (2, 3) vorgesehen sind, um die ersten und zweiten vier Speckle-Bilder aufzuzeichnen, und wobei das Interferometer (1) zwei an ihren Endkanten aneinander anstoßende koplanare Strahlteiler (4, 5) und einen ersten Spiegel (9) aufweist, der im wesentlichen parallel zu den Strahlteilern (4, 5) liegt, um Bilder zu reflektieren, die über den ersten Strahlteiler (4) von dem bestrahlten Material nach dem zweiten Strahlteiler (5) übertragen werden, um dadurch auf die erste Aufzeichnungseinrichtung (2) übertragen zu werden, und wobei dadurch eine Reflexion nach der zweiten Aufzeichnungseinrichtung (3) bewirkt wird, und wobei ein piezo-elektrischer Wandler (10) auf einem zweiten Spiegel (11) angeordnet ist, der im wesentlichen parallel zu den koplanaren ersten und zweiten Strahlteilem (4, 5) und im wesentlichen parallel zu dem ersten Spiegel (9) und auf diesen hin gerichtet angeordnet ist, um Bilder, die von dem ersten Strahlteiler (4) nach dem zweiten Strahlteiler (5) reflektiert wurden, zu reflektieren, um sie dadurch nach der zweiten Aufzeichnungseinrichtung (3) zu reflektieren und um dadurch eine Reflexion nach der ersten Aufzeichnungseinrichtung (2) zu bewirken, wobei der zweite Spiegel (11) in einem Winkel von im wesentlichen einem Grad gegenüber dem ersten Spiegel (9) geneigt ist, um ein Shearing der Bilder zu bewirken und um über den piezo-elektrischen Wandler (10) eine Phasenverschiebung herbeizuführen.

2. Vorrichtung nach Anspruch 1, bei welcher jeder Strahlteiler (4, 5) eine Würfelform aufweist, wobei die beiden Strahlteiler (4, 5) mit ihren Kanten aneinandergefügt sind, um zwei gegenüberliegende dreieckige Räume zwischen den beiden Strahlteilern (4, 5) zu schaffen, wobei der erste Spiegel (9) in dem einen Dreiecksraum, anstoßend an einen äußeren Rand (4a, 5a) eines jeden Strahlteilers (4, 5), angeordnet ist und der zweite Spiegel (11) parallel zu dem ersten Spiegel (9) und im Abstand hierzu über dem anderen Dreiecksraum angeordnet sind, um an jeweils einen weiteren äußeren Rand (4b, 5b) eines jeden Strahlteilers (4, 5) anzustoßen.

3. Vorrichtung nach Anspruch 2, bei welcher der erste Spiegel (9) von einer Seitenfläche eines 45°- Prisma gebildet wird, wobei das Prisma in dem einen Dreiecksraum angeordnet ist und auf die beiden Strahlteiler (4, 5) weist, wobei diese Seitenfläche den Spiegel (9) bildet, der die beiden 45°- Winkel verbindet.

4. Vorrichtung nach Anspruch 3, bei welcher die zwei Aufzeichnungseinrichtungen (2, 3) benachbart zu einer äußeren Oberfläche (5d) des zweiten Strahlteilers (5) vorgesehen sind, die dem ersten Spiegel (9) anliegt, während der andere Spiegel benachbart zur äußeren Oberfläche (5c) des zweiten Strahlteilers (5) dem zweiten Spiegel (11) anliegt.

5. Vorrichtung nach Anspruch 4, bei welcher jede Aufzeichnungseinrichtung (2, 3) eine ladungsgekoppelte Einrichtung ist, die als Kamera wirkt.

6. Vorrichtung nach einem der Ansprüche 1 bis 5, welche einen optischen Linsenaufbau (12) aufweist, der benachbart zu einer Fläche (4c) des ersten Strahlteilers (4) liegt und an dem zweiten Spiegel (11) anliegt und die Bilder des bestrahlten Materials auf den ersten Strahlteiler (4) richtet.

7. Vorrichtung nach einem der Ansprüche 1 bis 5, welche einen ersten optischen Linsenaufbau (12a) aufweist, der zwischen dem zweiten Strahlteiler (5) und der ersten Aufzeichnungseinrichtung (2) liegt, wobei ein zweiter optischer Linsenaufbau (12b) zwischen dem zweiten Strahlteiler (5) und der zweiten Aufzeichnungseinrichtung (3) angeordnet ist.

8. Verfahren zur zerstörungsfreien Prüfung von Materialien, wobei das zu prüfende Material durch kohärente Strahlung beleuchtet wird, mit den folgenden Schritten:

(a) es wird ein erstes aus zwei seitlich versetzten Speckle-Bildern des bestrahlten nicht beanspruchten Materials paarweise gleichzeitig durch ein zweiarmiges Shearing-Mach-Zehnder-Interferometer (1) erzeugt, das das bestrahlte Material betrachtet, und es erfolgt eine Aufzeichnung auf zwei getrennten Aufzeichnungseinrichtungen (2, 3),

(b) die ersten beiden Speckle-Bilder werden differenziert, um ein drittes Bild ($I_A$) zu erzeugen,

(c) die Pfadlänge einer der Arme des Interferometers (1) wird vergrößert, um eine Phasenverschiebung von $\pi/2$ rad zu erzeugen,

(d) es wird ein zweites Paar seitlich versetzter Speckle-Bilder des nicht beanspruchten bestrahlten Materials gleichzeitig durch das Interferometer (1) erzeugt und durch die beiden getrennten Aufzeichnungseinrichtungen (2, 3) aufgezeichnet,

(e) das zweite Speckle-Bild-Paar wird differenziert, um ein viertes Bild ($I_B$) zu erzeugen,

(f) das Speckle-Phasen-Profil $\Phi_1$ wird aus dem nicht beanspruchten beleuchteten Material aus der folgenden Beziehung abgeleitet

$$\Phi_1 = \tan^{-1}\left(\frac{I_B}{I_A}\right),$$

wobei die Schritte (a) bis (f) wiederholt werden, während das Material beansprucht ist, um ein Beanspruchungs-

Speckle-Phasen-Profil $\Phi_2$ zu erzeugen, und wobei der Differenzausdruck $\Phi_1$ - $\Phi_2$ berechnet wird, um die Materialfehler aufzudecken.

9. Verfahren nach Anspruch 8, bei welchem die Schritte (b) und (e) im wesentlichen gleichzeitig ausgeführt werden.

10. Verfahren nach den Ansprüchen 8 oder 9, bei welchem die benutzte kohärente Strahlung eine sichtbare Lichtstrahlung ist.

**Revendications**

1. Appareil pour le test non destructif d'un matériau éclairé par une radiation cohérente incluant un interféromètre Mach-Zehnder à dédoublement à deux bras (1) pour générer des premières images quadriphasées de figure de speckle latéralement décalées du matériau non contrait éclairé et des secondes images quadriphasées de figure de speckle latéralement décalées du matériau contrait illuminé, ainsi que deux dispositifs d'enregistrement séparés (2, 3) pour l'enregistrement des premières et des secondes images quadriphasées de figure de speckle, dont l'interféromètre (1) possède deux séparateurs de faisceau coplanaires(4, 5) situés aux extrémités, un premier miroir (9) situé globalement parallèlement aux séparateurs de faisceau (4, 5) afin de réfléchir les images transmises via le premier séparateur de faisceau (4) depuis le premier matériau éclairé vers le second séparateur de faisceau (5) pour une transmission, de cette façon, vers le premier dispositif d'enregistrement (2) et pour une réflexion, de cette façon, vers le second dispositif d'enregistrement (3), et un second miroir (11) monté sur un transducteur piézo-électrique (10) situé globalement parallèlement aux premier et second séparateurs de faisceau coplanaires (4, 5) et globalement parallèlement et en face du premier miroir (9) de façon à réfléchir les images réfléchies du premier séparateur de faisceau (4) vers le second séparateur de faisceau (5) pour une transmission, de cette façon, vers le second dispositif d'enregistrement (3) et pour une réflexion, de cette façon, vers le premier dispositif d'enregistrement (2), dont le second miroir (11) est incliné d'un angle globalement égal à un degré par rapport au premier miroir (9) afin de fournir un dédoublement des images et de pouvoir utiliser le transducteur piézo-électrique (10) pour modifier le déphasage.

2. Appareil selon la revendication 1, dans lequel chaque séparateur de faisceau (4, 5) est de forme cubique, les deux séparateurs de faisceau (4, 5) étant situés côté contre côté de façon à définir deux espaces triangulaires opposés entre les deux séparateurs de faisceau (4, 5), avec le premier miroir (9) situé dans un des dits espaces triangulaires et placé de façon conziguë à un bord extérieur (4a, 5a) de chacun des séparateurs de faisceau (4, 5), et avec le second miroir (11) placé parallèlement au premier miroir et espacé de ce dernier (9) à travers l'autre espace triangulaire mentionné de façon à attenir à un autre bora extérieur (4b, 5b) de chacun des séparateurs de faisceau (4, 5).

3. Appareil selon la revendication 2, dans lequel le premier miroir (9) est la face d'un prisme à 45 degrés, lequel prisme est situé dans un des espaces triangulaires précités en établissant un contact face à face avec les deux séparateurs de faisceau (4, 5), avec la face utilisée comme miroir (9) reliant les deux angles à 45 degrés.

4. Appareil selon la revendication 3, dans lequel les deux dispositifs d'enregistrement (2, 3) sont eitués pour l'un de façon adjacente à la surface externe (5d) du second séparateur de faisceau (S) et attenant au premier miroir (9), et pour l'autre de façon adjacente à la surface externe (5c) du second séparateur de faisceau (5) et attenant au second miroir (11).

5. Appareil selon la revendication 4, dans lequel chaque dispositif d'enregistrement (2, 3) est un dispositif à couplage de charge fonctionnant comme une caméra.

6. Apparcil selon l'une quelconque des revendications 1 à 5, comprenant un bloc optique (12) situé de façon adjacente à une face (4c) du premier séparateur de faisceau (4) et attenant au second miroir (11) et utilisé pour diriger les images du matériau éclairé vers le premier séparateur de faisceau (4).

7. Appareil selon l'une quelconque des revendications 1 à 5, comprenant un premier bloc optique (12a) situé entre le second séparateur de faisceau (5) et le premier dispositif d'enregistrement (2) et un second bloc optique (12b) situé entre le second séparateur de faisceau (5) et le second dispositif d'enregistrement (3).

8. Procédé pour le test non destructif d'un matériau, dans lequel le matériau à tester est éclairé par une radiation cohérente, (a) deux premières images de figure de speckle latéralement décalées du matériau non contrait éclairé sont simultanément générées par un interféromètre Mach-Zehnder à dédoublement à deux bras (1) qui voit le matériau éclairé et sont enregistrées au niveau de deux dispositifs d'enregistrement séparés (2, 3), (b) les dites deux premières images de figure de speckle sont différenciées de façon à produire une troisième image ($I_A$), (c) la longueur de parcours de l'un des bras de l'interféromètre (1) est incrémentée de façon à produire un déphasage de $\pi/2$ radians, (d) deux secondes images de figure de speckle latéralement décalées du matériau non contrait éclairé sont simultanément générées par ledit interféromètre (1) et enregistrées au niveau desdits deux dispositifs d'enregistrement séparés (2, 3), (e) les secondes deux images de figure de speckle sont différentiées de façon à produire une quatrième image ($I_B$), (f) pour le matériau éclairé non contrait, le profil de b phase speckle $\phi1$ est dérivé de la relation

$$\phi1 = \tan^{-1}(I_B/I_A)$$

les étapes (a) à (f) sont répétées avec le matériau soumis à des contraintes afin de produire un profil de phase speckle $\phi2$, et la différence $\phi1 - \phi2$ est calculée pour révéler les défauts du matériau.

**9.** Procédé selon la revendication 8, dans lequel les étapes (b) et (e) sont globalement menées en même temps.

**10.** Procédé selon la revendication 8 ou la revendication 9, dans lequel la radiation cohérente utilisée est une radiation lumineuse visible.

# Fig.1.

Fig.2.

Fig.3.